Europäisches Patentamt

(19) European Patent Office

Office européen des brevets

(11) Publication number: **0 005 916**
A1

## (12) EUROPEAN PATENT APPLICATION

(21) Application number: 79300782.4

(22) Date of filing: 08.05.79

(51) Int. Cl.²: **F 16 F 1/18**
**B 60 G 11/02, B 32 B 17/06**

(30) Priority: 26.05.78 GB 2345878
16.02.79 GB 7905640

(43) Date of publication of application:
12.12.79 Bulletin 79/25

(84) Designated Contracting States:
BE DE FR IT LU NL SE

(71) Applicant: GKN Group Services Limited
Group Head Office P.O. Box 55
Smethwick Warley West Midlands B66 2RZ(GB)

(72) Inventor: Bennett, Cyril Claude
22 Maidowers Lane
St.George Bristol(GB)

(72) Inventor: Bailey, John Cecil
68 Bush Avenue
Little Stoke Bristol(GB)

(72) Inventor: Harris, Leighton Richard
43 Lawrence Weston Road
Bristol(GB)

(72) Inventor: Worgan, Gordon Peter
88 Highworth Crescent
Yate Bristol(GB)

(74) Representative: Robertson, Bernard Collett et al,
Guest, Keen & Nettlefolds Limited Group Head Office
P.O. Box 55
Smethwick, Warley West Midlands B66 2RZ(GB)

(54) Spring manufacture.

(57) A leaf spring of fibre reinforced composite material, with first (18) and second (19) layers of fibres lying longitudinally of the spring and a spacer element (20) of randomly orientated fibres spacing such layers (18-19) from one another in the direction of bending of the spring. End fittings (23,29,35,45,47,49,52,64,73) for attachment of the spring to a vehicle may be incorporated in the fibre reinforced synthetic resin structure of the spring, or secured to the spring by clamping elements (26,42,66,74,75).

FIG 2

78.42/GMD          Spring Manufacture

This invention relates to leaf springs, and to a method of making such leaf springs from a composite fibre reinforced synthetic resin material. For convenience hereafter, such a spring will be referred to as a composite spring.

It has been proposed hitherto that leaf springs can be made from a composite, fibre reinforced synthetic resin, material. A spring made of such material can when correctly designed present an advantage of decreased weight over the conventional steel leaf spring commonly used, for example, in motor vehicles. The advent of fibres of a material such as carbon having enhanced physical properties compared with fibres such as glass enables a composite spring to be even more advantageous in weight and performance. However, since carbon fibres are a relatively expensive material, they must be used very selectively in the manufacture of a spring if a great cost penalty is not to be incurred.

Various proposals for spring construction of fibre reinforced resin have been proposed hitherto, e.g. in United States patent 3,900,357. It is the object of the present invention to provide an improved spring construction, the advantages of which will be set forth hereinafter.

According to one aspect of the present invention, we provide a composite spring comprising first and second layers of fibres at least the majority of which are orientated to lie longitudinally of the spring, and a spacer element of randomly orientated fibres therebetween in at least the central part of the length of the spring to space said layers from one another in the direction of bending of the spring, all said fibres being incorporated in a matrix of cured synthetic resin.

The fibres of said first and second layers may include or entirely comprise carbon fibres, while the fibres of said spacer element are glass fibres.

By randomly orientated fibres, we mean that the fibres may be truly randomly orientated in three dimensions, or may be randomly orientated generally in two dimensions only, i.e. longitudinally and transversely of the spring but not in the direction of bending of the spring.

Various forms of end fitting permit attachment of the spring, for example, a motor vehicle, may be provided, and several embodiments of such end fittings are described hereinafter.

According to another aspect of the present invention, we provide a method of making a composite spring comprising applying to a former at least one layer of fibres at least the majority of which are orientated to lie longitudinally of the spring, applying thereto a pre-formed spacer element of randomly orientated fibres in a resin matrix, applying thereto at least one further layer of fibres the majority of which are orientated longitudinally of the spring, impregnating the fibres before, during and/or after their application to the former with resin, and subjecting the resulting assembly of fibres to treatment to cause the resin to set and form the composite spring.

Preferably the assembly of fibres with the resin in an uncured or partially cured condition is removed from the former and introduced into a mould wherein heat and pressure are applied to cure the resin and form the spring to the required shape.

When a leaf spring is subjected to bending, those parts of the spring on the inner side of the neutral axis thereof having regard to the direction of bending of the spring are subjected to compression forces, and those parts of the spring on the other side of the neutral axis to tension. These effects are greatest at the greatest distance from the neutral axis, and the present invention provides that the maximum such forces occur in the surface layers of longitudinally orientated fibres. The properties of a spring made in accordance with the invention can thus accurately be predicted. Further, because the surface layers make the maximum contribution to the characteristics of the spring the present invention provides that relatively expensive fibres such as carbon fibres are placed in such surface layers, where they will be of most benefit to the properties of the spring. The parts of the spring close to the neutral axis thereof make little contribution to the spring characteristics, and there is little value in having fibres such as carbon fibres in such a region. By the present invention, the region close to the neutral axis of the spring is of a relative inexpensive material, namely the randomly orientated fibres.

Usually, leaf springs, particularly for application to motor vehicles, are required to be of a curved shape, and in order to achieve such a shape the former to which the fibres are applied preferably is itself of the required curve, e.g. part elliptical, shape. By this means, deformation of the assembly of fibres in the curing mould is not required, thereby ensuring in the finished composite spring the correct fibre orientation in the respective layers, corresponding to that in which the fibres initially are applied to the former.

Also, typically, leaf springs are required to be of tapered configuration in that a spring is thicker, in the direction of bending, in its centre region than at its ends. To achieve this, the invention provides that the pre-formed spacer element may be of such tapered configuration.

The method may comprise applying the fibres to the former in a sufficient width to form a plurality of individual springs, the resulting assembly being cut longitudinally into individual springs subsequent to the curing thereof.

The method may include forming, adjacent an end of the spring, a transversely extending groove formation to provide a point for attachment of the spring to a part of a motor vehicle. Alternatively, a metal eye component or the like may be incorporated in the fibre structure of the spring adjacent to each end thereof, to provide for such attachment. Various forms of such end fittings are described hereafter.

The invention will now be described by way of example with reference to the accompanying drawings, of which:-

FIGURE 1 is a diagrammatic representation of apparatus with which a spring may be manufactured in accordance with the method of the present invention

FIGURE 2 is a view in cross section of a spring manufactured by the method of the invention

FIGURES 3 and 4 are views respectively in plan and elevation of one end of a spring

FIGURES 5 to 17 respectively show further different end configurations for springs.

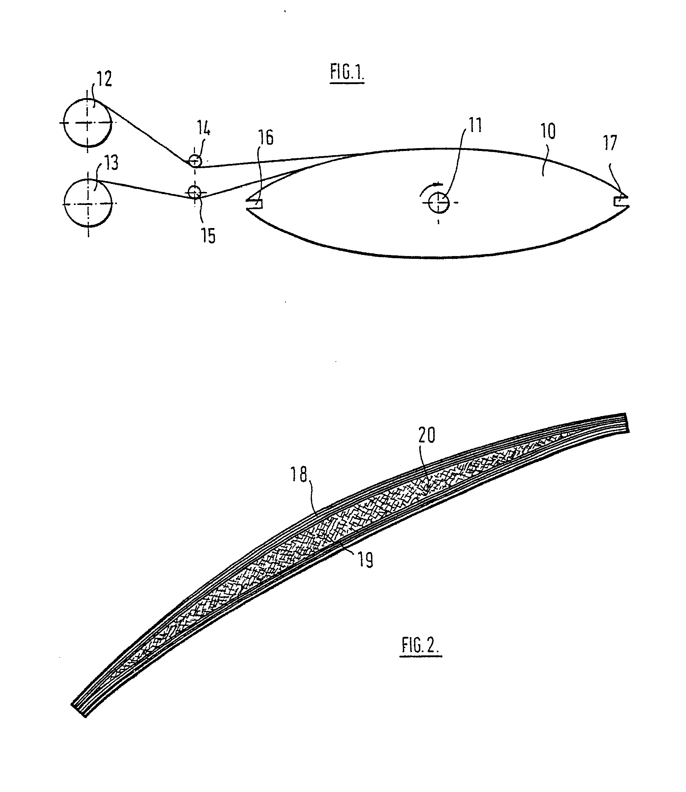

Referring firstly to Figure 1 of the drawings, there is illustrated apparatus for making composite springs in accordance with the method of the present invention. The apparatus comprises a former 10 of elliptical shape, rotatable about an axis 11 at its centre. Layers of fibres can be wound onto the elliptical surface of the former by rotating the former, the fibres being drawn from supply reels

12, 13 by way of guides 14, 15, respectively. The guides may provide for tensioning of the fibres to be applied to the surface of the former.

In order to build up a composite spring on the former, according to the present invention, the surface of the former firstly has applied thereto at least one layer of fibres the majority of which fibres extend longitudinally of what is to be the finished spring, i.e. tangentially to the elliptical surface of the former 10 as the fibres are applied thereto. Such fibres may be applied in the form of tapes or the like stored on reels 12 and 13, it being appreciated that there may be fibres extending laterally of the direction in which fibres are applied to the former 10 to constitute weft fibres in which to maintain the form of the tapes. These fibres may be pre-impregnated with synthetic resin, e.g. epoxy resin in an uncured or partially cured state, or such resin may be applied to the fibres as they are applied to the former 10.

When a sufficient quantity of fibres are built up upon the former, to form what is to be one surface layer of each finished spring, spacer elements pre-formed from randomly orientated fibres in a resin matrix are applied to the former 10. Each spacer element is of tapered form having a relatively thick central region tapering to thin end regions. Further layers of fibres to the desired thickness are then built up by further winding on the former 10.

When the desired quantities of fibres are applied to the former, the resulting assembly is cut at the ends of the former 10 by an appropriate blade being operated in slots 16, 17 at the end of the former 10. This gives two individual part-elliptic leaf springs which are transferred to appropriate moulds where heat and pressure are applied to cause the synthetic resin to set and complete manufacture of the spring.

The fibres which are applied longitudinally of each spring may include or even be wholly formed from high strength fibres, e.g. carbon fibres. For example, carbon fibres may be fed from reel 12 and the glass fibres from reel 13 to the former 10. The randomly orientated fibres of which the spacer element is constituted may be glass fibres, e.g. in the form of layers of chopped strand mat, which means that such fibres are not truly randomly orientated in three dimensions but are randomly orientated in directions longitudinally and transversely of the spring.

The spring construction resulting from this method is shown diagrammatically in Figure 2. Thus the spring, of part elliptic form, comprises upper and lower "skins" 18, 19 of longitudinally orientated fibres, and the spacer element 20 of random fibres. When such a spring is loaded in the bending mode, the longitudinally orientated fibres of the outer portion 18, 19 are responsible for most of the load-deflection characteristics of the spring, while the fibres of the spacer elements 20 make little contribution to this.

It has been found however, that a spring constructed in accordance with the present invention presents certain advantages if it should be subjected to a greater load than that for which it has been designed. In particular it has been found that the mode of failure of such a spring when overloaded is that of breakage of the randomly orientated fibre spacer element rather than of the skin portions, the result being a sudden change in the characteristics of the spring but not complete breakage thereof. Such catastrophic failure of a spring could be extremely serious if it occurred in a motor vehicle, possible leading to sudden loss of control of the vehicle, whereas the mode of failure of a spring manufactured in accordance with the present invention is potentially much safer if it occurred due to overloading of a vehicle.

If, desired, the width of the former 10 upon which the springs are shaped may be sufficient to provide for a plurality of such springs to be made in one operation of applying fibres to the former. In this case, subsequent to the curing of the resin impregnating the fibres, the assembly may be cut longitudinally to produce a number of individual springs.

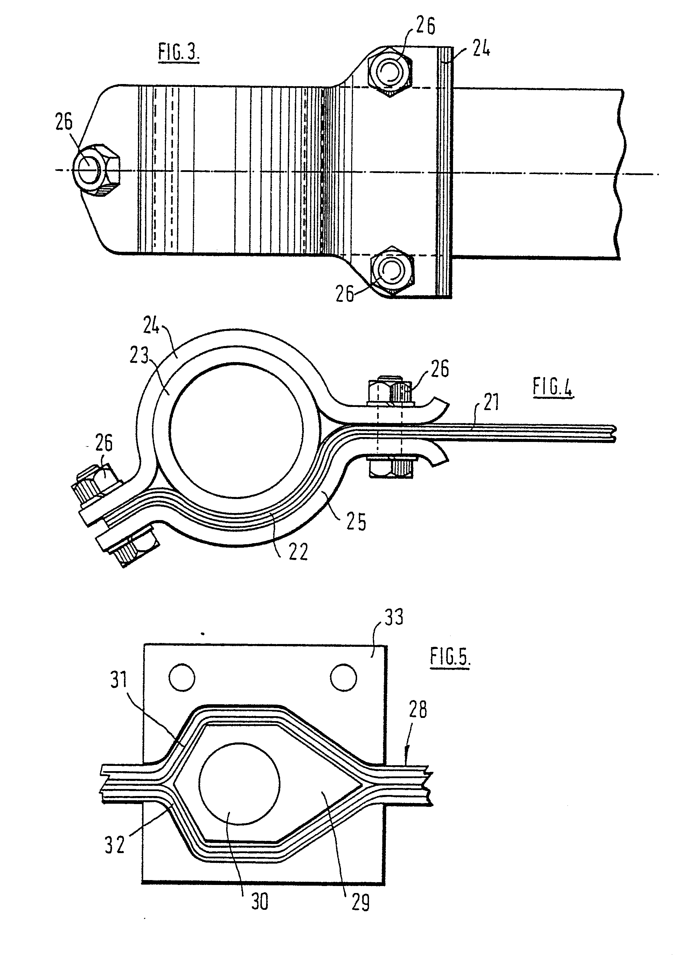

Referring now to Figures 3 and 4 of the drawings, there is illustrated one manner in which the end of a spring may be formed to permit its attachment to a spring supporting suspension component of a vehicle. In this embodiment, the end portion of the spring is indicated at 21, and is formed, in the moulding process by which the resin impregnating the fibres is cured, with a transversely extending groove 22 of part circular cross section. A metal eye 23 can then be secured to the spring by upper and lower half clamps 24, 25 which are clamped together by bolts 26. Two bolts 26 are used on either side of the spring 21 at the end of the clamp which is towards the centre of the spring, so that it is not necessary to perforate the spring in this region, although a single bolt 26 which does penetrate the spring can be used at the free end thereof. An appropriate bolt or pin can then be passed through the eye 23 to secure the spring to the relevant suspension component.

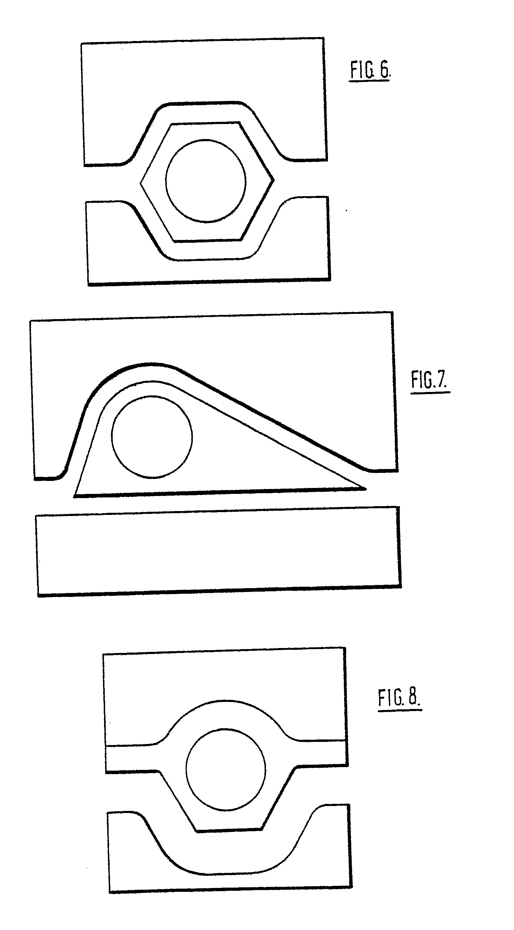

Referring now to Figure 5 of the drawings, there is illustrated the end of a spring 28 in which is incorporated a metal insert 29 with an aperture 30 providing for attachment to a suspension component. This is made by introducing the insert between the upper and lower layers 31, 32 of longitudinally extending fibres of the spring, and then, during the process of curing the resin of the spring, placing the assembly between mould or die elements 33, 34 which are pressed together so that the insert 29 is, in effect, moulded into the end of the spring. With such a construction, no additional clamp elements or the like are necessary to secure the spring to a vehicle, a bolt merely being passed through aperture 30. Further alternative forms of insert for such an assembly are depicted in Figures 6 to 8. In Figure 6, an insert of hexagonal form is shown, between correspondingly shaped die elements. In Figure 7, the insert is offset with respect to the neutral axis of the spring so that the lower side of the spring presents an uninterrupted flat face, to permit the use of the spring with another full length leaf spring in a multi-leaf spring. In Figure 9, the insert is bonded to one side of the spring only, i.e. is not totally enclosed in the fibres of the spring.

The spring end configurations of Figures 5 to 7 are designed so that if failure occurs due to tensile overload, such failure will occur at the interface between the structural skin of the spring and the spacer elements incorporated therein, the skin layers of the spring remaining intact and retaining the moulded insert in position. Catastrophic failure at the free end of the spring is thus avoided.

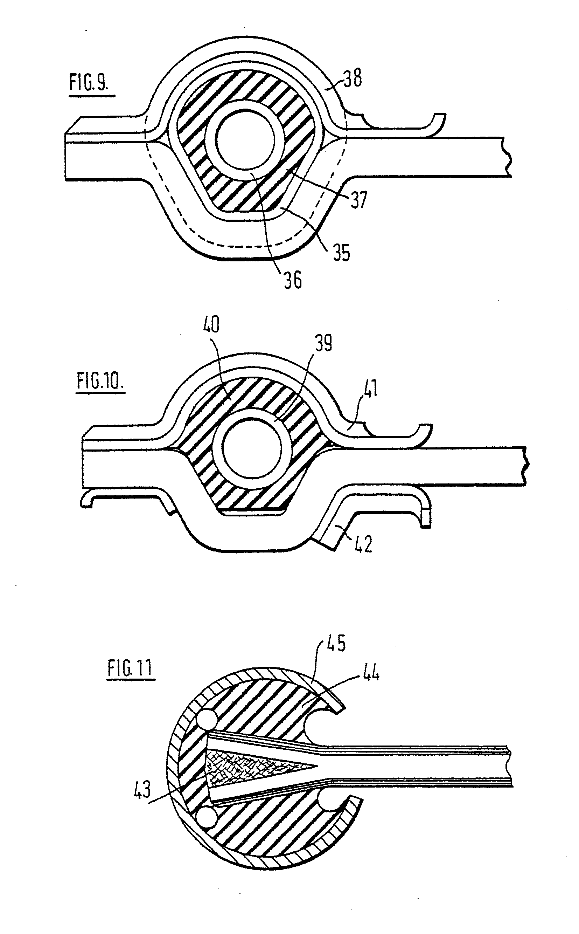

Referring now to Figures 9 and 10 of the drawings, these show further arrangements by which the end portion of a spring, formed with a transversely extending groove by the method of the present invention (as depicted in Figures 3 and 4) may be provided with means for attaching to suspension components of a vehicle. In Figure 10, a bush comprising an outer metal element 35, a circular eye 36, and an intermediate bonded elastomeric element 37, is secured to the end of the spring by a half clamp 38. In Figure 11, a metal eye 39 incorporated in an elastomeric bush 40 which does not have a metal outer element is secured to the spring by clamps 41, 42.

Referring now to Figure 11 of the drawings, in this embodiment the end portion of the spring is split, between its upper and lower layers of longitudinally extending fibres, by insertion of a composite wedge 43 prior to curing of the spring. This serves to retain the spring captive within an elastomeric insert 44 in a metal sleeve 45, subsequently applied to the spring, and the spring would be secured to a vehicle by reception of sleeve 45 in a suitable socket on the vehicle.

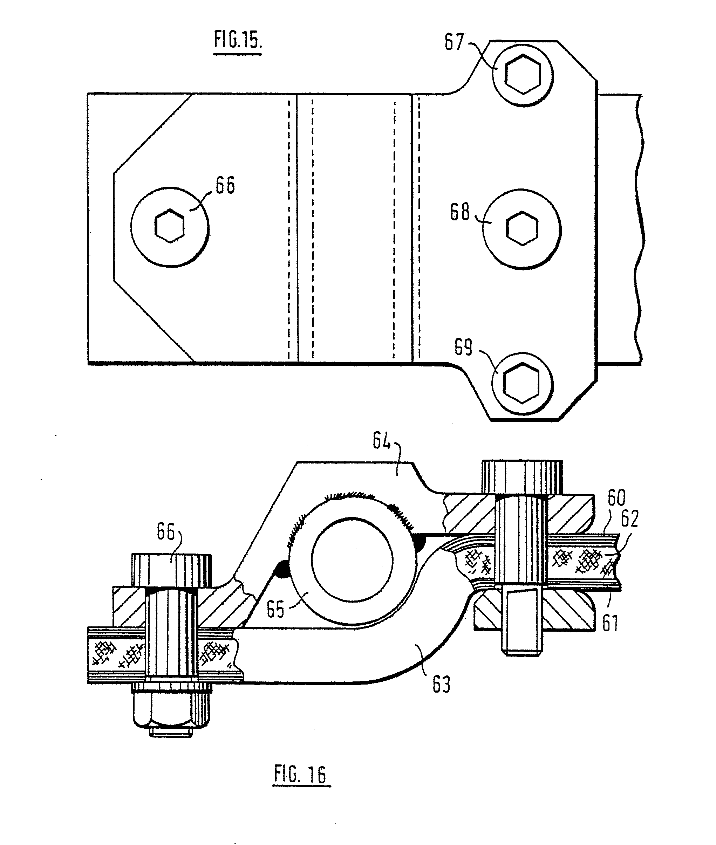

Figure 14 is an embodiment generally similar to that of Figure 11, with the difference that the end portion of the spring, which is split and has a composite wedge inserted, is held within a metal or synthetic resin cylindrical element 46 which is held within a metal sleeve 47 with the intermediary of elastomeric insert 48.

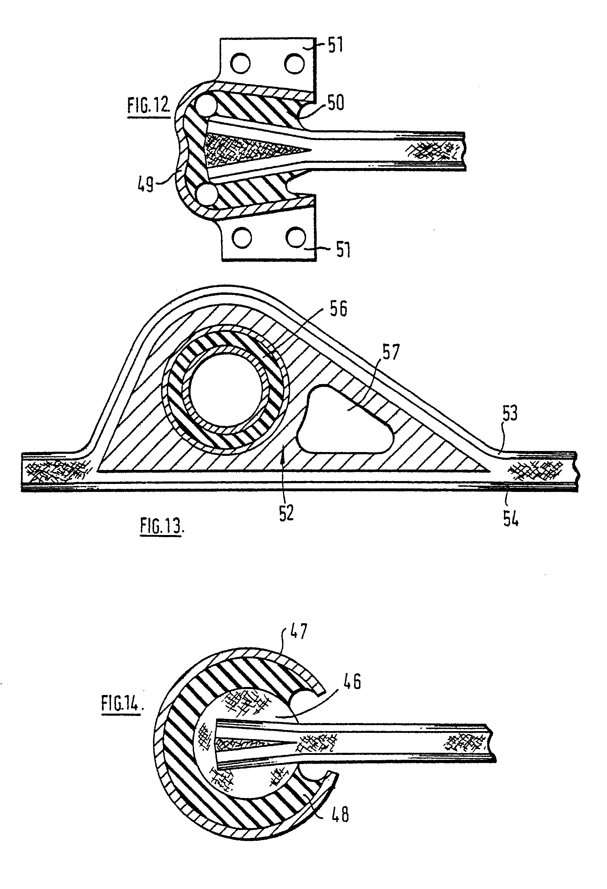

In Figure 12, the end of the spring is split and has a composite wedge inserted as for Figures 11 and 14, but in this case is retained in a metal bush 49 of generally U-section with the intermediary of an elastomeric insert 50. The metal bush 49 is provided with apertured flanges 51 for attachment purposes.

Figure 13 shows a construction somewhat similar to that indicated diagrammatically in Figure 7, with an insert 52 incorporated in the end of a leaf spring, between the respective skin layers 53, 54 of longitudinally orientated carbon fibres and within spacer layer 55 of randomly orientated glass fibres. The insert may be itself of a composite material, and incorporate a metal-rubber-metal bush 56 for attachment purposes and itself be apertured as at 57 for lightness.

Referring now to Figures 15 and 16, these are respectively plan and elevation of a further configuration of spring end. This has the spring, with skin layer of fibres 60, 61 and spacer layer 62, formed as a step at 63. A metal element 64 has welded to it a hollow cylindrical bush 65, and is secured to the spring by a single clamping bolt 66 at the free end of the spring and three bolts 67, 68, 69, engaging with a clamping plate 70, towards the centre of the spring. It is to be noted that the bush 65 does not actually contact the material of the spring.

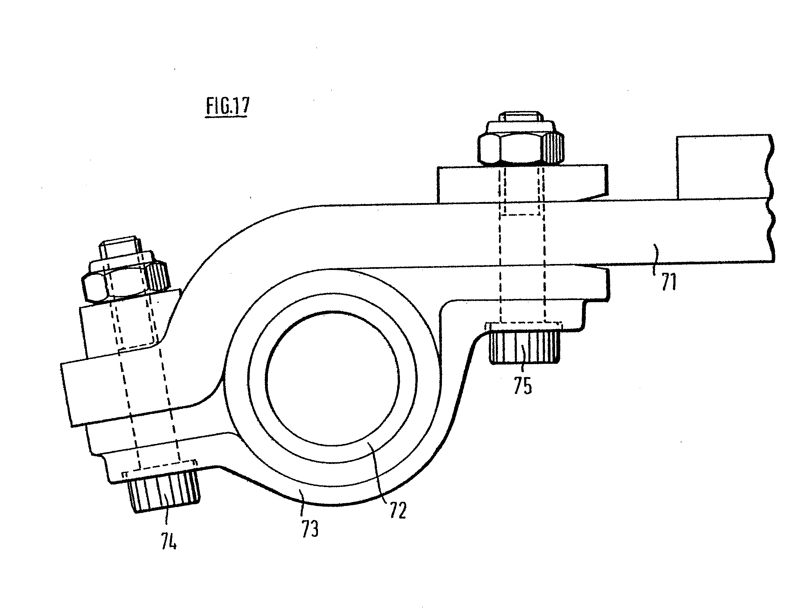

In the embodiment of Figure 17, the spring 71 is, as for Figures 15 and 16, bent to afford a step but in this embodiment an element 73 including a portion 72 affording a transverse aperture is held to the spring by bolts 74, 75 extending through the spring. The element 73 has a shape which closely follows the step in the spring to reduce the possibility of relative movement between it and the spring, and to withstand loads longitudinally of the spring.

CLAIMS

1. A leaf spring made from a fibre reinforced synthetic resin material and characterised by comprising first and second layers (18, 19) of fibres at least the majority of which are orientated to lie longitudinally of the spring, and a spacer element (20) of randomly orientated fibres therebetween in at least the central part of the length of the spring to space said first and second layers (18, 19) from one another in the direction of bending of the spring, all said fibres being incorporated in a matrix of cured synthetic resin.

2. A spring according to Claim 1, further characterised in that the fibres of said first and second layers (18, 19) at least partially comprise carbon fibres.

3. A spring according to Claim 1 or Claim 2, further characterised by comprising at at least one end thereof a member (29, 52) disposed between said first and second layers of fibres, said member affording a transversely extending aperture (30) for receiving an attachment fastening element.

4. A spring according to Claim 1 or Claim 2 further characterised by being formed adjacent at least one end thereof to define a transversely extending recess or groove (22), a member (23) affording an attachment aperture being held to such recess or groove by a clamping element (24).

5. A method of making a composite spring, characterised by applying to a former (10) at least one layer of fibres (19) at least the majority of which are orientated to lie longitudinally of the spring, applying thereto a pre-formed spacer element (20) of randomly orientated fibres in a resin matrix, applying thereto at least one further layer of fibres (18) the majority of which are orientated longitudinally of the spring, impregnating the fibres before, during, and/or after their application with resin, and subjecting the resulting assembly of fibres to treatment to cause the resin to set and form the composite spring.

6. A method according to Claim 5 further characterised in that the assembly of fibres, with the resin in an uncured or partially cured condition, is removed from the former and introduced into a mould wherein heat and pressure are applied to cure the resin and form the spring of the required shape.

7. A method according to Claim 5 or Claim 6 further characterised in that the pre-formed spacer element (20) is of tapered configuration.

8. A method according to any of Claims 5, 6, or 7 further characterised by applying the fibres to the former in sufficient width to form a plurality of individual springs, and cutting the assembly longitudinally subsequent to curing thereof.

9. A spring according to Claim 1 or Claim 2 further characterised by an end formed to define a transversely extending step (63), and a member (65) affording an attachment aperture secured to the spring at said step with a surface conforming to the spring at said step.

10. A spring according to Claim 1 or Claim 2 further characterised by an end portion which is of increased thickness to retain the spring in an attachment member (45, 47, 49).

11. A spring according to Claim 10 further characterised in that said attachment member retains the end of the spring with the intermediary of an elastomeric element (44, 48, 50).

FIG.1.

FIG.2.

0005916

2/7

FIG.3.

26

26

24

26

FIG.4

24
23
26
21
26
25
22

33

FIG.5.

31
28
32
30    29

FIG 6.

FIG.7.

FIG. 8.

FIG. 9.

FIG. 10.

FIG. 11

FIG.12.

51
50
49
51

FIG.13.

56
57
53
52
54

FIG.14.

47
46
48

0005916

6/7

FIG.15.

67

66

68

69

64

66

60
62
65
63
61

FIG. 16

FIG.17

71

75

72

73

74

# EUROPEAN SEARCH REPORT

**European Patent Office**

## DOCUMENTS CONSIDERED TO BE RELEVANT

| Category | Citation of document with indication, where appropriate, of relevant passages | Relevant to claim |
|---|---|---|
| X | FR - A - 1 411 011 (FAIREY)  <br> * entire document * <br>  --- | 1,5 |
| X | AUTOMOTIVE ENGINEERING, Vol. 86, no. 2, February 1978 <br> NEW YORK (US) <br> D. SCOTT: "International viewpoints carbon fibers closer to auto parts" page 20 <br><br> * page 20, last paragraph, lower picture * <br>  --- | 1,2,3,5,7 |
| X | DE - B - 1 231 967 (VEB SACHSEN RING AUTOMOBILWERKE) <br><br> * entire document * <br> --- | |
| P,E | DE - A - 2 731 577 (TRANSFORMATO-REN UNION) <br><br> * entire document * <br> --- | 1,5 |
| | GB - A - 1 333 558 (SECRETARY OF STATE FOR DEFENSE) <br><br> * entire document * <br> --- | 1,2,5,6 |
| | DE - B - 1 139 703 (BÖLKOW-ENT-WICKLUNGEN) <br><br> * entire document * <br> --- | 1 |
| | US - A - 2 635 869 (JURGENS) <br><br> * column 1, line 43 to column 2, line 26; figures 1,2 * <br> --- | 10,11 |
| | | ./. |

**CLASSIFICATION OF THE APPLICATION (Int. Cl.²)**

F 16 F 1/18
B 60 G 11/02
B 32 B 17/06

**TECHNICAL FIELDS SEARCHED (Int.Cl.²)**

F 16 F
B 60 G
B 32 B
E 04 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-08-1979 | ESPEEL |

EPO Form 1503.1  06.78

0005916

European Patent
Office

EUROPEAN SEARCH REPORT

–2–Application number

EP 79 30 0782

| Category | Citation of document with indication, where appropriate, of relevant passages | Relevant to claim |
|---|---|---|
| | GB - A - 540 194 (STIRLING)<br><br>* figures 1-4 * | 4 |
| | GB - A - 378 137 (STIRLING)<br><br>* page 3, line 47 to page 4, line 5; figures 1-5 * | 9 |
| D | US - A - 3 900 357 (HUCHETTE) | 1,2,3,<br>5,6,8 |
| A | FR - A - 1 235 669 (MINNESOTA MI-NING COMP.) | 1 |
| A | DE - C - 826 822 (VON LÖWIS) | 1 |
| A | US - A - 3 142 598 (ROSEN) | 1 |
| A | GB - A - 1 392 983 (LORD) | 1 |

**DOCUMENTS CONSIDERED TO BE RELEVANT**

CLASSIFICATION OF THE APPLICATION (Int. Cl.²)

TECHNICAL FIELDS SEARCHED (Int. Cl.²)

EPO Form 1503.2  06.78